# EUROPEAN PATENT SPECIFICATION

(11) **EP 3 702 712 B1**
(45) Date of publication and mention of the grant of the patent: **24.04.2024**
(21) Application number: 18891569.8
(22) Date of filing: 21.12.2018
(51) Int. Cl.: F28F 1/12, F28F 1/42, F28D 1/053, F28F 13/12, F28F 1/30

(54) **OUTER FIN HEAT EXCHANGE TUBE AND USE METHOD THEREFOR**
AUSSENRIPPEN-WÄRMETAUSCHERROHR UND VERFAHREN ZU DESSEN VERWENDUNG
TUBE D'ÉCHANGE DE CHALEUR À AILETTES EXTERNES ET PROCÉDÉ D'UTILISATION ASSOCIÉ

(30) Priority: 22.12.2017 CN 201711410324
(43) Date of publication of application: 02.09.2020
(73) Proprietor: Shanghai Power Equipment Research Institute Co., Ltd., Shanghai 200240 (CN)
(72) Inventor: HUANG, Zhiqiang, Shanghai 200240 (CN); ZHENG, Kaiyun, Shanghai 200240 (CN)
(74) Representative: Huang, Liwei
(86) International application number: PCT/CN2018/122564
(87) International publication number: WO 2019/120278

(56) References cited:
- WO-A1-2014/050418
- WO-A2-2006/055916
- CN-A- 101 691 974
- CN-A- 101 691 974
- CN-A- 105 043 151
- CN-A- 105 758 245
- CN-A- 107 976 101
- CN-A- 109 059 601
- CN-U- 207 832 003
- DE-A1- 2 415 656
- US-A- 2 063 736
- US-A- 4 648 443
- US-A- 5 056 586
- US-A- 5 758 720
- US-A1- 2005 056 408
- US-A1- 2014 027 098

## Description

### TECHNICAL FIELD

The present disclosure relates to an outer fin heat exchanger tube and use method, and belongs to a technical field of efficient compact heat exchangers.

### BACKGROUND

Heat exchangers are key devices in various industrial productions such as electric power, chemical industry, vehicles and refrigeration; and costs in materials and processing and fabrication usually take up a major share of entire project investments, for example, in thermal power plants, investments in boilers and other various auxiliary heat exchangers account for about 70% of total investments in the power plants; and in petrochemical plants, investments in heat exchangers may account for more than 40% of total investments.

In recent years, energy-centric social development issues have become increasingly prominent; and energy conservation, energy efficiency improvement, and energy conversion efficiency improvement, etc. have become hotspots of technologies. In particular, new energy power generation, energy storage, co-generation, distributed energy and other fields are developing rapidly; and during application of these technologies, various new efficient compact heat exchangers have become an urgent need. Based on the existing heat exchanger design technology, and with aids of continuously developing fabrication process level and new fabrication technologies, new heat exchangers have very broad development space.

In new application fields such as the fourth generation of nuclear power, solar thermal power, ships and warships, the new Brayton cycle power generation method is used such that a working substance in a circulation loop is always in a gas or supercritical state, so an efficient gas-to-gas or gas-to-supercritical fluid heat exchanger is required, and meanwhile, in order to control costs and reduce volume, a compact heat exchanger is required. Since a heat transfer system of the working substance is much smaller than that of a liquid, and in order to ensure cycle efficiency, efficacy requirements of the heat exchanger are very high. Existing compact heat exchangers, such as diffusion welding printed circuit board heat exchangers, cost too much.

In design of various classic heat exchangers, heat exchanger tubes are commonly-used heat exchanger devices, and are widely used in apparatuses such as shell-tube heat exchangers, tube-plate heat exchangers, tube-fin heat exchangers, boilers, tube heaters, etc.; however, conventional heat exchanger tubes are not suitable for fabricating efficient compact heat exchangers, and improved design is needed. Adding fins on an outer surface of the heat exchanger tube may extend a heat exchange surface, which may simultaneously enlarge a heat transfer surface and increase a heat transfer coefficient, thereby improving heat transfer performance. The fin is a common way of enhancing heat transfer on a gas side surface, and includes an outer fin and an inner fin. Considering reasons on processing and fabrication technology and application, application of an outer fin heat exchanger tube is relatively convenient and inexpensive. Usually, a fin plane of an outer fin tube is perpendicular to an axial direction of the tube, and a flow direction of a medium inside the tube is perpendicular to a flow direction of a medium outside the tube, that is, cross-flow heat transfer. Heat exchange conditions with small temperature difference (<10 °C), especially gas-to-gas heat exchange with small temperature difference, for example, a regenerator in the Brayton cycle, may be implemented only by full adverse current heat exchange, at this time, the above-described outer fin tube is no longer suitable, and it is necessary to develop a new-type outer fin heat exchange tube for counter flow heat exchange.

At present, there is no public report on outer fin heat exchange tubes used for full counter flow heat exchange in the industry. Heat exchangers provided with outer fin heat exchanger tubes according to the preamble of claim 1 are known from documents WO 2006/055916 A2, CN 101 691 974 A, US 2014/027098 A1, WO 2014/050418 A1, US 4 648 443 A, US 2 063 736 A and DE 24 15 656 A1.

### SUMMARY

Technical problems to be solved by the present disclosure are how to enhance heat transfer of the heat exchanger tube, implement full counter flow heat exchange between medium inside and outside the tube, meet the requirements of heat exchange conditions with small temperature difference, and effectively control processing costs.

In order to solve the above-described technical problems, the invention as defined by independent claim 1 provides an outer fin heat exchanger tube, comprising:
A heat transfer tube, used for separating fluids inside and outside the tube, and implementing heat transfer between the fluids inside and outside the tube by convection and conduction;
Outer fin groups, used for extending an outer side heat exchange surface of the heat transfer tube, forming micro-channels, restricting a counter flow of an outside-of-tube fluid along the axial direction of the heat transfer tube, while simultaneously producing a turbulent flow action; and
An outer fin group frame, used for reducing transverse flow of the outside-of-tube fluid of the heat transfer tube;
Wherein, an outer wall of the heat transfer tube is connected to the multiple outer fin groups; the multiple outer fin groups are arrayed along the axial direction of the heat transfer tube; holes are formed in the outer fin groups; the holes of the multiple outer fin groups form micro-channels parallel to the axial direction of the heat transfer tube; and the periphery of each outer fin group is connected to each outer fin group frame.

Preferably, the outer fin groups are arrayed along the axial direction of the heat transfer tube at intervals.

Preferably, the outer fin groups are arrayed along the axial direction of the heat transfer tube without intervals.

Preferably, a separation distance between adjacent outer fin groups is less than 5 mm.

Preferably, the heat transfer tube is a metal tube that can withstand a specified temperature and pressure, and includes tubes with a circular cross-section and other cross-section or special-shaped tubes.

Preferably, an insert for enhancing heat exchange is provided inside the heat transfer tube.

Preferably, the outer fin group is a symmetrical structure formed by metal foils or thin strips arranged around the heat transfer tube; and surfaces of the metal foils or thin strips are parallel to the axial direction of the heat transfer tube.

Preferably, the metal foil or thin strip of the outer fin group has a width of 3 mm to 20 mm, and a thickness of 0.2 mm to 1 mm.

Preferably, formation inside the structure of the outer fin groups extends the heat exchange surface and the micro-channel; and the outer fin groups are designed as different fin structures in sections along the axial direction of the heat transfer tube to extend the heat exchange surface and a size of the micro-channel.

Preferably, the outer fin group frame is a fully enclosed structure formed by metal foils or thin strips arranged around the outer fin group; and surfaces of the metal foils or thin strips are parallel to the axial direction of the heat transfer tube.

Preferably, the metal foil or thin strip of the outer fin group frame has a width of 3 mm to 20 mm, and a thickness of 0.5 mm to 1.5 mm.

Preferably, a shape of the outer fin group frame is a symmetrical structure that may be periodically arrayed.

The present disclosure further provides a use method of the above-described outer fin heat exchanger tube, wherein, the outer fin heat exchanger tube is processed into a set specification and mounted as a component in a heat exchanger; an inside-of-tube fluid is input from an inlet end of the heat transfer tube, flows along the inside of the heat transfer tube to an outlet end of the heat transfer tube, the inside-of-tube fluid undergoes a heat transfer procedure with an inner surface of the heat transfer tube during the flow process; an outside-of-tube fluid is input from an outside-of-tube fluid inlet end of the heat exchanger, flows along the outside of the heat transfer tube in a direction opposite to that of the inside-of-tube fluid, to an outside-of-tube fluid outlet end of the heat exchanger, the outside-of-tube fluid of the heat transfer tube undergoes a heat transfer procedure with an outer surface of the heat transfer tube, the outer fin groups and the outer fin group frame during the flow process, and a heat transfer procedure occurs between the heat transfer tube, the outer fin groups and the outer fin group frame.

Preferably, the outer fin heat exchanger tube does not have the outer fin groups processed at the fluid inlet and outlet; and the outer fin groups and outer fin group frame of the outer fin heat exchanger tube are processed into matching structures at an inner wall surface of the heat exchanger outer shell according to a geometric shape of the inner wall surface of the heat exchanger outer shell.

Preferably, the inside-of-tube fluid and the outside-of-tube fluid of the heat exchanger tube undergo counter flow heat exchange; and the outer fin groups extend the outer side heat exchange surface of the heat transfer tube and disturb the flow, form the micro-channel, and restrain an counter flow of the outside-of-tube fluid through the micro-channel along the axial direction of the heat transfer tube.

As compared with the prior art, the outer fin heat exchanger tube provided by the present disclosure has advantageous effects below:
1. Full counter flow heat exchange is implemented between the fluids inside and outside the tube, and heat transfer with small temperature difference may be implemented.
2. When the outside-of-tube fluid passes through the micro-channel structure of the outer fin groups, the fins have sufficient turbulent flow action to improve a convective heat transfer coefficient.
3. By arranging different outer fin group structures in sections along the axial direction of the heat exchanger tube, an extended surface area and the size of the micro-channel may be varied, to implement variable cross-sectional design, and optimize performance and fabrication costs of the heat exchanger.
4. It may be used for fabricating efficient compact heat exchangers, especially applicable to gas-to-gas heat exchange conditions.

### BRIEF DESCRIPTION OF THE DRAWINGS

The exemplary implementation modes of the present disclosure may be more completely understood with reference to the following accompanying drawings:
FIG 1 is a schematic front view of an outer fin heat exchanger tube provided by Embodiment 1;
FIG 2 is a side view of the outer fin heat exchanger tube provided by Embodiment 1;
FIG 3 is a side view of an outer fin heat exchanger tube provided by Embodiment 2; and
FIG 4 is a side view of an outer fin heat exchanger tube provided by Embodiment 3;

### Description of reference signs:

1-heat transfer tube, 2-outer fin group, 3-outer fin group frame.

### DETAILED DESCRIPTION

Hereinafter, the present invention is further elaborated in conjunction with specific embodiments.

### Embodiment 1

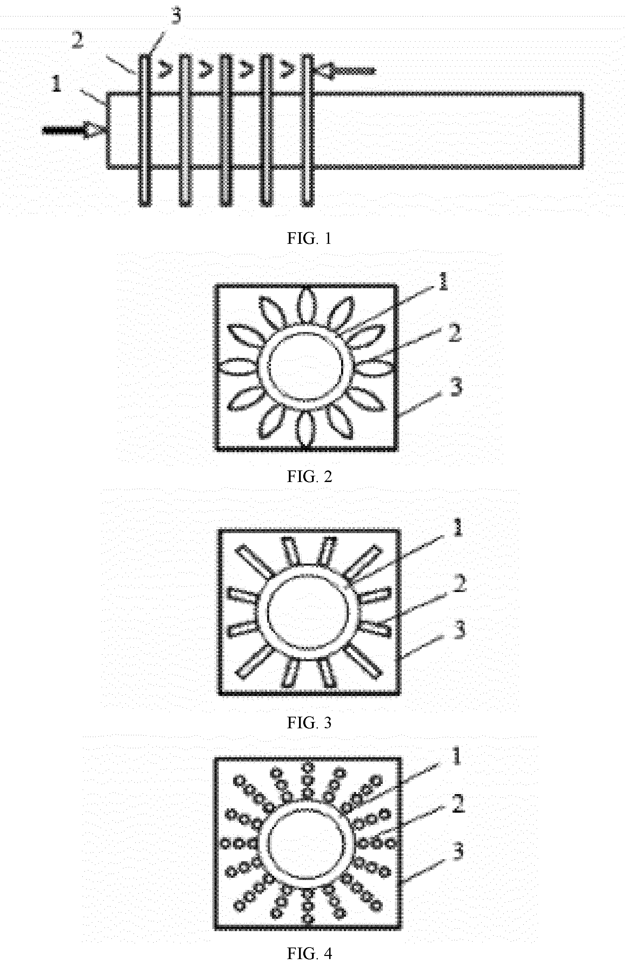

FIG 1 is a schematic front view of an outer fin heat exchanger tube provided by this embodiment; and the outer fin heat exchanger tube is composed of components below:
A heat transfer tube 1, used for separating two fluids inside and outside the tube, and implementing heat transfer mainly by convection and conduction;

Outer fin groups 2, used for extending an outer side heat exchange surface of the heat transfer tube 1, forming a micro-channel, restraining an counter flow of an outside-of-tube fluid along the axial direction of the heat transfer tube 1, while simultaneously producing a turbulent flow action; and

An outer fin group frame 3, used for reducing transverse flow of the outside-of-tube fluid of the heat transfer tube 1.

An outer wall of the heat transfer tube 1 is connected to the multiple outer fin groups 2; the multiple outer fin groups 2 are arrayed along the axial direction of the heat transfer tube 1; holes are formed in the outer fin groups 2; the holes of the multiple outer fin groups 2 form the micro-channel parallel to the axial direction of the heat transfer tube 1; and the peripheries of the outer fin groups 2 are connected to the outer fin group frame 3.

In conjunction with FIG 2, an outer fin group 2 is a hollow oval or oval-like frame structure formed by metal foils or thin strips. Multiple outer fin groups 2 are arranged around the heat transfer tube 1; and the outer fin groups 2 have a surface perpendicular to the axial direction of the heat transfer tube 1, and a cross section is formed into a symmetrical petal-like structure.

A working method of the above-described outer fin heat exchanger tube is as follows:
According to overall design of a heat exchanger, the outer fin heat exchanger tube is processed into required specifications, including specifications of the heat transfer tube 1, specifications of the outer fin groups 2 in different sections, and specifications of the outer fin group frame 3 in different regions, and is mounted as a component in the heat exchanger (e.g.: fabricated into a tube bundle of a shell-tube heat exchanger); when a more compact heat exchanger of a smaller volume is required, the heat exchanger constituted by the tube bundle composed of the heat transfer tube 1, the outer fin groups 2 and the outer fin group frame 3 as described above and other components may be directly fabricated by using an additive fabrication (3D printing) technology as a whole.

An inside-of-tube fluid of each heat transfer tube 1 is input from an inlet end of the heat transfer tube 1 (e.g., a tube box inlet of the shell-tube heat exchanger), flows along the inside of the heat transfer tube 1 to an outlet end of the heat transfer tube 1, the inside-of-tube fluid of the heat transfer tube 1 undergoes a heat transfer procedure with an inner surface of the heat transfer tube 1 during the flow process; the outside-of-tube fluid of the heat transfer tube 1 is input from an outside-of-tube fluid inlet end of the heat exchanger (e.g., a shell inlet of the shell-tube heat exchanger), flows along the outside of the heat transfer tube 1 in a direction opposite to that of the inside-of-tube fluid of the heat transfer tube 1, to an outside-of-tube fluid outlet end of the heat exchanger; the outside-of-tube fluid passes through the micro-channel of the outer fin groups 2, the outer fin groups 2 extend the outer side heat exchange surface of the heat transfer tube 1 and disturb the flow, and restrain an counter flow of the outside-of-tube fluid through the micro-channel along the axial direction of the heat transfer tube; the outside-of-tube fluid undergoes a heat transfer procedure with an outer surface of the heat transfer tube 1, the outer fin groups 2 and the outer fin group frame 3 during the flow process, and a heat transfer procedure occurs between the heat transfer tube 1, the outer fin groups 2 and the outer fin group frame 3.

### Embodiment 2

This embodiment is substantially the same as Embodiment 1, and differs in that: an outer fin group 2 is a hollow rectangular frame structure formed by metal foils or thin strips. Multiple outer fin groups 2 are arranged around the heat transfer tube 1; and the outer fin groups 2 have a surface perpendicular to the axial direction of the heat transfer tube, forming a symmetrical structure, as shown in FIG 3.

### Embodiment 3

This embodiment is substantially the same as Embodiment 1, and differs in that: an outer fin group 2 is fabricated by metal foils or thin strips, forming a strip-like structure with multiple hollow rings connected in sequence. Multiple outer fin groups 2 are arranged around the heat transfer tube 1, and the outer fin groups 2 have a surface perpendicular to the axial direction of the heat transfer tube, forming a symmetrical structure, as shown in FIG 4.

The above is only preferred embodiments of the present disclosure and is not any formal and substantial limitations to the present disclosure. It should be noted that a number of modifications and additions may be made by those skilled in the art without departing from the method of the present disclosure, and such improvements and additions are also considered to be within the scope of the present disclosure. Equivalent changes in the variations, modifications, and evolutions that may be made by the above-disclosed technical aspects by anyone skilled in the art, without departing from the spirit and scope of the present disclosure, are all equivalent embodiments of the present disclosure. At the same time, any variations, modifications and evolutions of any equivalent changes made to the above-described embodiments in accordance with the invention as defined by the appended claims.

## Claims

1. An outer fin heat exchanger tube, comprising:
a heat transfer tube (1), for separating fluids inside and outside the tube, and implementing heat transfer between the fluids inside and outside the tube by convection and conduction;
outer fin groups (2), for extending an outer side heat exchange surface of the heat transfer tube (1), forming micro-channels, restricting an counter flow of an outside-of-tube fluid along the axial direction of the heat transfer tube (1), and simultaneously producing a turbulent flow action, holes are formed in the outer fin groups (2); the holes of the multiple outer fin groups (2) form micro-channels parallel to the axial direction of the heat transfer tube (1);
**characterised in that** the outer fin heat exchanger tube further comprises outer fin group frames (3), for reducing transverse flow of the outside-of-tube fluid of the heat transfer tube (1),
wherein, an outer wall of the heat transfer tube (1) is connected to the multiple outer fin groups (2); the multiple outer fin groups (2) are arrayed along the axial direction of the heat transfer tube (1); and the periphery of each outer fin group (2) is connected to each outer fin group frame (3).

2. The outer fin heat exchanger tube according to claim 1, wherein, the heat transfer tube (1) is a metal tube.

3. The outer fin heat exchanger tube according to claim 1, wherein, an insert for enhancing heat exchange is provided inside the heat transfer tube (1).

4. The outer fin heat exchanger tube according to claim 1, wherein, each outer fin group (2) is a symmetrical structure formed by metal foils or thin strips arranged around the heat transfer tube (1); the surface of each metal foil or thin strip lies in parallel to the axial direction of the heat transfer tube (1).

5. The outer fin heat exchanger tube according to claim 1, wherein, a separation distance between adjacent outer fin groups (2) is less than 5 mm; and the outer fin groups (2) are designed as different fin structures in sections along the axial direction of the heat transfer tube (1), to extend the heat exchange surface and a size of the micro-channel.

6. The outer fin heat exchanger tube according to claim 1, wherein, each outer fin group frame (3) is a frame formed by a metal foil or thin strip arranged around the outer fin group (2) wherein the surface of the metal foil or thin strip lies in parallel to the axial direction of the heat transfer tube (1).

7. The outer fin heat exchanger tube according to claim 1, wherein, a shape of the outer fin group frame (3) is a symmetrical structure that may be periodically arrayed.

8. A use method of the outer fin heat exchanger tube according to any one of claims 1 to 3, wherein, the outer fin heat exchanger tube is processed into a set specification and mounted as a component in a heat exchanger; an inside-of-tube fluid is input from an inlet end of the heat transfer tube (1), flows along the inside of the heat transfer tube (1) to an outlet end of the heat transfer tube (1), the inside-of-tube fluid of the heat transfer tube (1) undergoes a heat transfer procedure with an inner surface of the heat transfer tube (1) during the flow process; an outside-of-tube fluid is input from an outside-of-tube fluid inlet end of the heat exchanger, flows along the outside of the heat transfer tube (1) in a direction opposite to that of the inside-of-tube fluid, to an outside-of-tube fluid outlet end of the heat exchanger, the outside-of-tube fluid of the heat transfer tube (1) undergoes a heat transfer procedure with an outer surface of the heat transfer tube (1), the outer fin groups (2) and the outer fin group frames (3) during the flow process, and a heat transfer procedure occurs between the heat transfer tube (1), the outer fin groups (2) and the outer fin group frames (3).

9. The use method of the outer fin heat exchanger tube according to 8, wherein, the outer fin heat exchange tube does not have the outer fin groups (2) processed at the fluid inlet and outlet; and the outer fin groups (2) and the outer fin group frames (3) of the outer fin heat exchange tube are processed into matching structures at an inner wall surface of the heat exchanger outer shell according to a geometric shape of the inner wall surface of the heat exchanger outer shell.

10. The use method of the outer fin heat exchanger tube according to 9, wherein, the inside-of-tube fluid and the outside-of-tube fluid of the the heat transfer tube (1) undergo adverse current heat exchange; and the outer fin groups (2) extend the outer side heat exchange surface of the heat transfer tube (1) and disturb the flow, form the micro-channel, and restrict an counter flow of the outside-of-tube fluid through the micro-channel along the axial direction of the heat transfer tube (1).

## Patentansprüche

1. Außenrippen-Wärmetauscherrohr, umfassend:
ein Wärmeübertragungsrohr (1) zum Trennen von Fluiden innerhalb und außerhalb des Rohres und Implementieren von Wärmeübertragung zwischen den Fluiden innerhalb und außerhalb des Rohres durch Konvektion und Leitung;
Außenrippengruppen (2) zum Erweitern einer Außenseitenwärmeaustauschoberfläche des Wärmeübertragungsrohres (1), zum Bilden von Mikrokanälen, zum Einschränken einer Gegenströmung eines Fluids außerhalb des Rohres entlang der axialen Richtung des Wärmeübertragungsrohres (1) und zum gleichzeitigen Produzieren einer turbulenten Strömungshandlung, wobei Löcher in den Außenrippengruppen (2) gebildet sind; wobei die Löcher der mehreren Außenrippengruppen (2) Mikrokanäle parallel zu der axialen Richtung des Wärmeübertragungsrohres (1) bilden;
**dadurch gekennzeichnet, dass** das Außenrippen-Wärmetauscherrohr ferner Außenrippengruppenrahmen (3) zum Reduzieren von Querströmung des Fluids außerhalb des Rohres des Wärmeübertragungsrohres (1) umfasst,
wobei eine Außenwand des Wärmeübertragungsrohres (1) mit den mehreren Außenrippengruppen (2) verbunden ist; wobei die mehreren Außenrippengruppen (2) entlang der axialen Richtung des Wärmeübertragungsrohres (1) aufgereiht sind; und der Umfang jeder Außenrippengruppe (2) mit jedem Außenrippengruppenrahmen (3) verbunden ist.

2. Außenrippen-Wärmetauscherrohr nach Anspruch 1, wobei das Wärmeübertragungsrohr (1) ein Metallrohr ist.

3. Außenrippen-Wärmetauscherrohr nach Anspruch 1, wobei ein Einsatz zum Verbessern von Wärmeaustausch innerhalb des Wärmeübertragungsrohres (1) bereitgestellt ist.

4. Außenrippen-Wärmetauscherrohr nach Anspruch 1, wobei jede Außenrippengruppe (2) eine symmetrische Struktur ist, die durch Metallfolien oder dünne Streifen gebildet ist, die um das Wärmeübertragungsrohr (1) angeordnet sind; wobei die Oberfläche jeder Metallfolie oder jedes dünnen Streifens parallel zu der axialen Richtung des Wärmeübertragungsrohres (1) liegt.

5. Außenrippen-Wärmetauscherrohr nach Anspruch 1, wobei ein Abstand zwischen benachbarten Außenrippengruppen (2) weniger als 5 mm ist; und die Außenrippengruppen (2) als unterschiedliche Rippenstrukturen in Abschnitten entlang der axialen Richtung des Wärmeübertragungsrohres (1) gestaltet sind, um die Wärmeaustauschoberfläche und eine Größe des Mikrokanals zu erweitern.

6. Außenrippen-Wärmetauscherrohr nach Anspruch 1, wobei jeder Außenrippengruppenrahmen (3) ein Rahmen ist, der durch eine Metallfolie oder einen dünnen Streifen gebildet ist, die/der um die Außenrippengruppe (2) angeordnet ist, wobei die Oberfläche der Metallfolie oder des dünnen Streifens parallel zu der axialen Richtung des Wärmeübertragungsrohres (1) liegt.

7. Außenrippen-Wärmetauscherrohr nach Anspruch 1, wobei eine Form des Außenrippengruppenrahmens (3) eine symmetrische Struktur ist, die periodisch aufgereiht sein kann.

8. Verwendungsverfahren des Außenrippen-Wärmetauscherrohres nach einem der Ansprüche 1 bis 3, wobei das Außenrippen-Wärmetauscherrohr zu einer festgelegten Spezifikation verarbeitet und als Komponente in einem Wärmetauscher montiert ist; ein Fluid innerhalb des Rohres von einem Einlassende des Wärmeübertragungsrohres (1) zugeführt wird, entlang der Innenseite des Wärmeübertragungsrohres (1) zu einem Auslassende des Wärmeübertragungsrohres (1) strömt, das Fluid innerhalb des Rohres des Wärmeübertragungsrohres (1) einen Wärmeübertragungsvorgang mit einer Innenoberfläche des Wärmeübertragungsrohres (1) während des Strömungsprozesses erfährt; ein Fluid außerhalb des Rohres von einem Einlassende des Fluids außerhalb des Rohres des Wärmetauschers zugeführt wird, entlang der Außenseite des Wärmeübertragungsrohres (1) in einer Richtung entgegengesetzt zu derjenigen des Fluids innerhalb des Rohres zu einem Auslassende des Fluids außerhalb des Rohres des Wärmetauschers strömt, das Fluid außerhalb des Rohres des Wärmeübertragungsrohres (1) einen Wärmeübertragungsvorgang mit einer Außenoberfläche des Wärmeübertragungsrohres (1), den Außenrippengruppen (2) und den Außenrippengruppenrahmen (3) während des Strömungsprozesses erfährt, und ein Wärmeübertragungsvorgang zwischen dem Wärmeübertragungsrohr (1), den Außenrippengruppen (2) und den Außenrippengruppenrahmen (3) stattfindet.

9. Verwendungsverfahren des Außenrippen-Wärmetauscherrohres gemäß 8, wobei das Außenrippen-Wärmeaustauschrohr nicht die Außenrippengruppen (2) aufweist, die an dem Fluideinlass und -auslass verarbeitet werden; und die Außenrippengruppen (2) und die Außenrippengruppenrahmen (3) des Außenrippen-Wärmeaustauschrohres zu passenden Strukturen an einer Innenwandoberfläche des Wärmetauscheraußenmantels gemäß einer geometrischen Form der Innenwandoberfläche des Wärmetauscheraußenmantels verarbeitet werden.

10. Verwendungsverfahren des Außenrippen-Wärmetauscherrohres nach 9, wobei das Fluid innerhalb des Rohres und das Fluid außerhalb des Rohres des Wärmeübertragungsrohres (1) Gegenströmungswärmeaustausch erfahren; und die Außenrippengruppen (2) die Außenseitenwärmeaustauschoberfläche des Wärmeübertragungsrohres (1) erweitern und die Strömung stören, den Mikrokanal bilden und eine Gegenströmung des Fluids außerhalb des Rohres durch den Mikrokanal entlang der axialen Richtung des Wärmeübertragungsrohres (1) einschränken.

## Revendications

1. Tube d'échangeur de chaleur à ailettes externes, comprenant :
un tube de transfert de chaleur (1), destiné à séparer les fluides à l'intérieur et à l'extérieur du tube, et à mettre en oeuvre un transfert de chaleur entre les fluides à l'intérieur et à l'extérieur du tube par convection et conduction ;
des groupes d'ailettes externes (2), destinés à étendre une surface d'échange de chaleur côté externe du tube de transfert de chaleur (1), formant des micro-canaux, limitant un contre-écoulement d'un fluide extérieur au tube le long de la direction axiale du tube de transfert de chaleur (1), et produisant simultanément une action d'écoulement turbulent,
des trous sont formés dans les groupes d'ailettes externes (2) ; les trous des multiples groupes d'ailettes externes (2) forment des micro-canaux parallèles à la direction axiale du tube de transfert de chaleur (1) ;
**caractérisé en ce que** le tube d'échangeur de chaleur à ailettes externes comprend en outre des cadres de groupe d'ailettes externes (3), destinés à réduire l'écoulement transversal du fluide extérieur au tube du tube de transfert de chaleur (1),
dans lequel, une paroi externe du tube de transfert de chaleur (1) est reliée aux multiples groupes d'ailettes externes (2) ; les multiples groupes d'ailettes externes (2) sont disposés le long de la direction axiale du tube de transfert de chaleur (1) ;
et
la périphérie de chaque groupe d'ailettes externe (2) est reliée à chaque cadre de groupe d'ailettes externes (3).

2. Tube d'échangeur de chaleur à ailettes externes selon la revendication 1, dans lequel le tube de transfert de chaleur (1) est un tube métallique.

3. Tube d'échangeur de chaleur à ailettes externes selon la revendication 1, dans lequel un insert pour améliorer l'échange de chaleur est prévu à l'intérieur du tube de transfert de chaleur (1).

4. Tube d'échangeur de chaleur à ailettes externes selon la revendication 1, dans lequel, chaque groupe d'ailettes externes (2) est une structure symétrique formée par des feuilles métalliques ou des bandes minces agencées autour du tube de transfert de chaleur (1) ; la surface de chaque feuille métallique ou bande mince est parallèle à la direction axiale du tube de transfert de chaleur (1).

5. Tube d'échangeur de chaleur à ailettes externes selon la revendication 1, dans lequel, une distance de séparation entre des groupes d'ailettes externes (2) adjacents est inférieure à 5 mm ; et les groupes d'ailettes externes (2) sont conçus comme des structures d'ailettes différentes en sections le long de la direction axiale du tube de transfert de chaleur (1), pour étendre la surface d'échange de chaleur et une taille du micro-canal.

6. Tube d'échangeur de chaleur à ailettes externes selon la revendication 1, dans lequel, chaque cadre de groupe d'ailettes externes (3) est un cadre formé par une feuille métallique ou une bande mince agencée autour du groupe d'ailettes externes (2), dans lequel la surface de la feuille métallique ou de la bande mince est parallèle à la direction axiale du tube de transfert de chaleur (1).

7. Tube d'échangeur de chaleur à ailettes externes selon la revendication 1, dans lequel, une forme du cadre de groupe d'ailettes externes (3) est une structure symétrique qui peut être disposée périodiquement.

8. Procédé d'utilisation du tube d'échangeur de chaleur à ailettes externes selon l'une quelconque des revendications 1 à 3, dans lequel, le tube d'échangeur de chaleur à ailettes externes est exploité dans une spécification définie et monté en tant que composant dans un échangeur de chaleur ; un fluide intérieur au tube est introduit depuis une extrémité d'entrée du tube de transfert de chaleur (1), s'écoule le long de l'intérieur du tube de transfert de chaleur (1) jusqu'à une extrémité de sortie du tube de transfert de chaleur (1), le fluide intérieur au tube du tube de transfert de chaleur (1) subit une procédure de transfert de chaleur avec une surface interne du tube de transfert de chaleur (1) pendant le processus d'écoulement ; un fluide extérieur au tube est introduit depuis une extrémité d'entrée de fluide extérieur au tube de l'échangeur de chaleur, s'écoule le long de l'extérieur du tube de transfert de chaleur (1) dans une direction opposée à celle du fluide intérieur du tube, jusqu'à une extrémité de sortie de fluide extérieur au tube de l'échangeur de chaleur, le fluide extérieur au tube du tube de transfert de chaleur (1) subit une procédure de transfert de chaleur avec une surface extérieure du tube de transfert de chaleur (1), les groupes d'ailettes externes (2) et les cadres de groupe d'ailettes externes (3) pendant le processus d'écoulement, et une procédure de transfert de chaleur se produit entre le tube de transfert de chaleur (1), les groupes d'ailettes externes (2) et les cadres de groupe d'ailettes externes (3).

9. Procédé d'utilisation du tube d'échangeur de chaleur à ailettes externes selon la revendication 8, dans lequel, le tube d'échange de chaleur à ailettes externes ne comporte pas de groupes d'ailettes externes (2) exploités au niveau de l'entrée et de la sortie de fluide ; et les groupes d'ailettes externes (2) et les cadres de groupe d'ailettes externes (3) du tube d'échange de chaleur à ailettes externes sont exploités dans des structures correspondantes au niveau d'une surface de paroi interne de l'enveloppe externe d'échangeur de chaleur selon une forme géométrique de la surface de paroi interne de l'enveloppe externe de l'échangeur de chaleur.

10. Procédé d'utilisation du tube d'échangeur de chaleur à ailettes externes selon la revendication 9, dans lequel, le fluide intérieur au tube et le fluide extérieur au tube du tube de transfert de chaleur (1) subissent un échange de chaleur à courant indésirable ; et les groupes d'ailettes externes (2) étendent la surface d'échange de chaleur côté externe du tube de transfert de chaleur (1) et perturbent l'écoulement, forment le micro-canal et limitent un contre-écoulement du fluide extérieur au tube à travers le micro-canal le long de la direction axiale du tube de transfert de chaleur (1).
